# EUROPEAN PATENT SPECIFICATION

(11) **EP 4 082 788 B1**
(45) Date of publication and mention of the grant of the patent: **03.06.2026**
(21) Application number: 20905034.3
(22) Date of filing: 19.10.2020
(51) Int. Cl.: B32B 27/40, A01G 9/14, A01G 9/24, B32B 23/08, B32B 27/06

(54) **MULTILAYER SHEET ROLL**
MEHRSCHICHTIGE FOLIENROLLE
ROULEAU DE FEUILLE MULTICOUCHE

(30) Priority: 27.12.2019 JP 2019237974
(43) Date of publication of application: 02.11.2022
(73) Proprietor: FUJIFILM Corporation, Tokyo 106-8620 (JP)
(72) Inventor: KATANO, Shogo, ashigara-shi, Kanagawa 250-0193 (JP); IKEYAMA, Akihiro, ashigara-shi, Kanagawa 250-0193 (JP)
(74) Representative: Hoffmann Eitle
(86) International application number: PCT/JP2020/039291
(87) International publication number: WO 2021/131270

(56) References cited:
- WO-A1-2016/103898
- WO-A1-2016/103898
- WO-A1-2019/130828
- WO-A1-2019/130828
- WO-A1-2020/004331
- WO-A1-2020/004331
- JP-A- 2008 015 500
- JP-A- 2008 015 500

## Description

### BACKGROUND OF THE INVENTION

### 1. Field of the Invention

The present invention relates to a laminated sheet roll which is a lining screen of an agricultural greenhouse.

### 2. Description of the Related Art

Agricultural greenhouses, also called vinyl greenhouses or plastic greenhouses, are facilities in which a cultivation space is covered with a transparent covering material so that the environment can be adjusted, and are widely used. In the cultivation employing an agricultural greenhouse, a covering material may be used for the lining inside the agricultural greenhouse in order to keep warm in the cold season. As a shape of the lining, for example, a partition (ceiling screen) on the roof of the greenhouse, a hem (side lining) on a side surface of the greenhouse, or a roll screen or curtain that can be unrolled and wound, or can be rolled up is employed.

In addition to transparency and heat-retention properties, the lining is required to have functions such as fog suppression, drip-proofness, and moisture permeability. As a material of the lining, a vinyl-based resin such as vinyl chloride or polyvinyl alcohol, a polyolefin such as polyethylene or an ethylene-vinyl acetate copolymer, polyester, or a fluororesin film is used. In a case where these materials are used, various measures have been taken to give various functions as described above. For example, in a case where the lining is made of polyolefin, condensation may occur, which may lead to excessive humidity in the greenhouse. Therefore, fog suppression or moisture permeability is additionally performed by lamination of net materials or the formation of a composite sheet of net and polyolefin.

In order to prevent condensation due to the lining, a material of the lining itself may have moisture permeability. For example, a laminated sheet in which a net-like film consisting of flat yarn is laminated and integrated on one side or both sides of a moisture-permeable thermoplastic polyurethane resin film is disclosed (JP2008-126613A). This laminated sheet is excellent in transparency and tear strength because it is not necessary to use an additive for imparting moisture permeability to the lining material.

As a material containing a thermoplastic polyurethane resin, a laminated sheet consisting of a thermoplastic polyurethane film having a specific crystalline property and a woven fabric, a non-woven fabric, a foam sheet, or the like is disclosed (JP1989-315427 (JP-H1-315427)). This thermoplastic polyurethane resin film has characteristic values in which the mechanical strength is balanced in the vertical and horizontal directions, and is non-adhesive and has excellent handleability. Therefore, the thermoplastic polyurethane resin film is suitable to be used as a film for lamination with materials such as woven fabrics, non-woven fabrics, and foam sheets.

WO 2019/130828 A1 discloses a laminate film for packaging material, comprising a cellulose-acylate-containing base material and a resin layer, wherein the resin layer is formed on one surface of the base material and contains a mixture of an acrylic resin and a cellulose derivative, a silicone elastomer, and/or a urethane elastomer, wherein the laminate film has a moisture permeability of 60-700g/m² per day at 40°C and relative humidity of 90%.

WO 2016/103898 A1 discloses a film for an agricultural house by which a CO₂ concentration required for photosynthesis by plants can be kept without ventilation, wherein the film is a cellulose film having a thickness of 60-200 µm, comprises a cellulose acylate resin and has an equilibrium moisture content of 4-8% at 25°C under a relative humidity of 80%.

JP 2008-015500 discloses a protection film for polarizing plate, comprising a covering layer and a transparent base material film, wherein the protection film has a moisture permeability of 300 g/m² per day at 60°C and a relative humidity of 95%, the covering layer comprises a polymer containing a repetitive unit derived from a chlorine-containing vinyl monomer, and the base material film is composed of cellulose acylate, wherein the covering layer is formed on one surface of the base material film.

### SUMMARY OF THE INVENTION

In a case where a composite sheet of a net and a resin film, a material obtained by lamination of a resin film and a foam body, or the like is used as a material for the lining of an agricultural greenhouse, in terms of heat-retention properties, a resin film laminated with a net material, there is no problem with heat-retention during the night, but heat-retention during the day may reduce the transparency (daylighting properties) of sunlight required for growing plants. It is desired to have moisture permeability, drip-proofness, or condensation prevention property in addition to heat-retention properties.

Therefore, an object of the present invention is to provide a laminated sheet roll which is a lining screen of an agricultural greenhouse that is excellent in heat-retention properties and daylighting properties, and can suppress condensation.

The laminated sheet roll is a lining screen of an agricultural greenhouse and is configured to be unrollable and windable.

According to the present invention, it is possible to provide a laminated sheet roll that is excellent in heat-retention properties and daylighting properties, and can suppress condensation.

### BRIEF DESCRIPTION OF THE DRAWINGS

Fig. 1 is an illustrative diagram of an example of a layer configuration of a laminated sheet.
Fig. 2 is an illustrative diagram schematically showing air convection and light in an agricultural greenhouse in a case where a ceiling screen is not provided; (A) of Fig. 2 is daytime and (B) of Fig. 2 is nighttime.
Fig. 3 is an illustrative diagram schematically showing air convection and light in an agricultural greenhouse in a case where a ceiling screen and a side screen are provided; (A) of Fig. 3 is daytime and (B) of Fig. 3 is nighttime.
Fig. 4 is an illustrative diagram of an example of a layer configuration of a laminated sheet including a saponified layer.
Fig. 5 is an illustrative diagram of another example of the layer configuration of the laminated sheet.
Fig. 6 is an illustrative diagram of the other example of the layer configuration of the laminated sheet including the saponified layer.
Fig. 7 is an illustrative diagram of a layer configuration of a laminated sheet including two saponified layers.
Fig. 8 is an illustrative diagram showing a configuration of a laminated sheet roll.
Fig. 9 is a schematic diagram showing a cross-section in a plane perpendicular to a longitudinal direction in a case where a ceiling screen is unrolled in an agricultural greenhouse having a glass outer lining.
Fig. 10 is a schematic diagram showing a cross-section in a plane perpendicular to a longitudinal direction in a case where a ceiling screen is wound in an agricultural greenhouse having a glass outer lining.
Fig. 11 is a schematic diagram showing a cross-section in a plane perpendicular to a longitudinal direction in a case where a ceiling screen and a side screen are unrolled in an agricultural greenhouse having a polyolefin outer lining.

### DESCRIPTION OF THE PREFERRED EMBODIMENTS

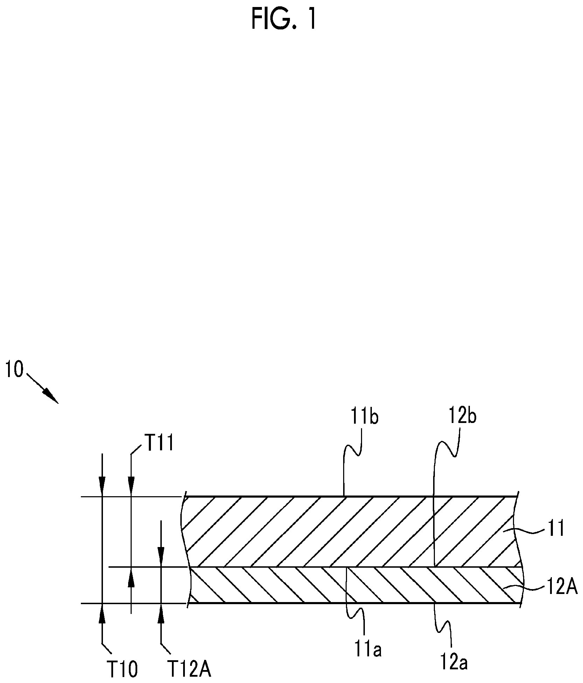

A laminated sheet of the laminated sheet roll includes a substrate layer and an outer layer. The outer layer is a layer laminated on the substrate layer. The substrate layer and the outer layer are composed of different resins. For example, as shown in Fig. 1, a laminated sheet 10 includes a substrate layer 11 and a first outer layer 12A that is an outer layer. The substrate layer 11 and the first outer layer 12A are in close contact with each other, and the first outer layer 12A is provided to cover at least one surface 11a of the substrate layer 11. The first outer layer 12A is arranged over the entire one surface 11a of the substrate layer 11.

The laminated sheet 10 has a moisture permeability of 100 g/m²·day (24h) or more at a temperature of 40°C and a relative humidity of 90% (hereinafter, the relative humidity is referred to as RH that is an abbreviation for relative humidity). In the present specification, the moisture permeability means a moisture permeability obtained in accordance with Japanese Industrial Standards JIS Z0208:1976, Condition B (temperature 40°C, 90%RH).

In a case where the moisture permeability of the laminated sheet 10 is within the above described range, the laminated sheet 10 has high antifogging properties, suppresses condensation and dropwise addition of condensed moisture on the laminated sheet 10, and has a humidity adjusting effect. Therefore, in a case where the laminated sheet 10 is used as a lining of an agricultural greenhouse, for example, in a case where excessive moisture is generated in the greenhouse, condensation is prevented from occurring on a surface of the laminated sheet 10, and drip-proofness and fog suppression in the greenhouse are achieved. The moisture permeability is preferably in a range of 100 g/m²·day or more and 1000 g/m²·day or less, and more preferably in a range of 150 g/m²·day or more and 700 g/m²·day or less.

The laminated sheet 10 is transparent. Therefore, the substrate layer 11 or the first outer layer 12A is individually transparent. The term "transparent" means that the visible light is substantially transmitted and a traveling direction of the incident light changes irregularly on the surface and inside of the laminated sheet 10, or the incident light is less likely to be scattered. Therefore, in a case of being transparent, for example, the parallel light transmittance is a specific value or more, or the haze is a specific value or less in addition to the total light transmittance is a specific value or more. The laminated sheet 10 preferably has a total light transmittance of 90% or more and a parallel light transmittance of 70% or more. In the present specification, the total light transmittance and the parallel light transmittance are both values measured in accordance with Japanese Industrial Standards JIS K7361-1:1997. The measurement is performed using a haze meter or the like capable of being measured in accordance with the standard. In the present specification, the measurement was performed using SH 7000 (manufactured by NIPPON DENSHOKU INDUSTRIES Co., Ltd.), which is a spectral haze meter, as the haze meter.

The laminated sheet 10 has not only high total light transmittance but also high parallel light transmittance. Therefore, transparency is high, light scattering is suppressed, and daylighting properties are high. The daylighting properties are day light transmission and means that a larger amount of light can be obtained through the laminated sheet 10. Therefore, for example, in a case where the laminated sheet 10 is used as a lining of an agricultural greenhouse, light incident through an outer lining of the agricultural greenhouse is efficiently acquired through the laminated sheet 10 in a state where the amount of light is larger. In addition, due to the high daylighting properties, the inside of the agricultural greenhouse is bright, and more light required for plants can be taken in the agricultural greenhouse. The laminated sheet 10 more preferably has a total light transmittance of 90% or more and a parallel light transmittance of 80% or more. The laminated sheet 10 still more preferably has a total light transmittance of 90% or more and a parallel light transmittance of 85% or more.

The laminated sheet 10 preferably has a haze of 10% or less. In the present specification, the haze is a value measured in accordance with Japanese Industrial Standards JIS K7136:2000 and is a value measured using the above described spectral haze meter SH7000 (manufactured by NIPPON DENSHOKU INDUSTRIES Co., Ltd.).

Since the haze is 10% or less, the laminated sheet 10 has high transparency, can prevent scattering of incident light, and can have higher daylighting properties. The laminated sheet 10 more preferably has a haze of 7% or less, still more preferably 5% or less, and particularly preferably 3% or less.

In order to keep the haze low, it is preferable that particles or the like that cause light to be scattered are not contained in the substrate layer 11 and the first outer layer 12A constituting the laminated sheet 10. In addition, it is preferable that the substrate layer 11 and the first outer layer 12A are in close contact with each other, and the scattering of light at an interface is small. Furthermore, it is preferable that a surface texture of the surface of the laminated sheet 10 is smoother. In order to keep the haze of the laminated sheet 10 low, other usual methods may be applied to the laminated sheet 10, the substrate layer 11, and/or the first outer layer 12A.

On the other hand, in order to suppress the adhesiveness between sheets in a range in which the haze is suppressed, a fine matting agent and an uneven shape can be applied to a surface layer. The matting agent is an additive for suppressing the adhesiveness of a surface of a sheet and improving sliding properties. As the matting agent, either organic or inorganic fine particles can be used. Examples of the fine particles include silicon dioxide and the like, titanium dioxide, aluminum oxide, and the like, and an average particle size of the fine particles can be preferably used in a range of 0.05 µm or more and 3.0 µm or less. As the fine particles of silicon dioxide, for example, commercially available products such as Aerosil (registered trademark) NX90S, R972, R972V, R974, R812, 200, 200V, 300, R202, OX50, TT600 (all manufactured by Nippon Aerosil Co., Ltd.) can be used.

The substrate layer 11 is formed of a thermoplastic polyurethane resin (hereinafter, referred to as TPU that is an abbreviation for thermoplastic polyurethane). As the TPU used for the substrate layer 11, TPU having at least a layered shape and having a performance that does not impair the moisture permeability and transparency of the laminated sheet 10 in a case where the TPU is formed into a layer is used.

TPU is an elastomer obtained by the synthesization of a polyol such as polyester or a polyether polyol, an organic diisocyanate, and a short chain diol that is a chain extender, as main raw materials. TPU is composed of a soft segment composed of a polyol and a hard segment composed of an organic diisocyanate and a short chain diol, and physical properties thereof can be adjusted by a ratio of these. Therefore, it is not necessary to adjust the physical properties only with the additive, and an increase in haze due to the additive can be suppressed. In order to obtain a low haze, it is preferable that the surface texture of a TPU layer as the substrate layer 11 is smooth.

As TPU, commercially available products can be used, and a two-component curable polyurethane, an ester (adipate) type, an ester (lactone) type, an ether type, a polycarbonate type, an aliphatic non-yellowing type, and the like can be used. Specific examples thereof include Pandex (registered trademark) GW series "GW-3670/HX-770" (manufactured by DIC Corporation), which is a system for two-component curable continuous coating urethane film, Elastron (registered trademark) C80A, C85A, C90A, C95A, C64D, 1180A, 1185A, 1190A, 1195A, 1164D, ET385, ET880, ET885, ET890, ET858D, ET860D, ET864D, NY515N11A, NY585, NY90A, NY1197A (manufactured by BASF SE), as a thermoplastic polyurethane elastomer, Pandex (registered trademark) T-5105, T-5201, T-5265, T8175, T8180, T8185, T8190, T8195, DP9370A, 5377A, 588, KU2-8659, DP5094A (manufactured by DIC Covestro Polymer Ltd.), Desmopan (registered trademark) 487, 5080A, DP88586, DP88395, Resamine (registered trademark) P-1000, P-7000, P-2000 series (manufactured by Dainichiseika Color & Chemicals Mfg. Co., Ltd.), and the like. Among these, the aliphatic non-yellowing type is preferable as the thermoplastic polyurethane elastomer and can be appropriately selected from Elastran series, Pandex series, Desmopan series, and the like form the viewpoint of the moisture permeability and elastic modulus. Two or more types of TPU may be used in combination. A commercially available polyurethane film may be used. Specific examples thereof include Tough Grace (registered trademark) (manufactured by Takeda Sangyo Co., Ltd.).

The first outer layer 12A is formed of a resin. A resin used for the first outer layer 12A can be formed to have at least a layered shape and to have a performance that does not impair the moisture permeability and transparency of the laminated sheet 10 in a case of being formed into a layer, and as described below, a resin with specific tensile modulus is used.

Examples of the resin used for the first outer layer 12A include cellulose acylate, nylon, polyvinyl alcohol or polyvinyl alcohols such as an ethylene-vinyl alcohol copolymer, hard urethane, and the like, and any of these is preferable. Specifically, cellulose acylate, nylon, or hard urethane can be preferably used.

The first outer layer 12A has a tensile modulus in a range of 0.2 GPa or more and 10 GPa or less. In the present specification, the tensile modulus is a value measured under the following conditions in accordance with Japanese Industrial Standards JIS K7161:2014. That is, a single film such as the first outer layer 12A or a laminated sheet in which the first outer layer 12A is formed on a substrate film for the measurement is cutout by changing by 45° in a cutting direction of a measurement direction at a length of 150 mm and a width of 15 mm to prepare 8 test pieces, the prepared 8 test pieces are stretched under condition adjustment and test atmosphere in which a temperature is 25°C at 60%RH, a length between chucks is 100 mm, and a tensile speed is 200 mm/min, and strains are measured in a case where elongation is 0.1% and 0.5%, respectively, to obtain each tensile modulus by calculating each of inclinations of the strains at two points and averaging the calculated results to obtain a value. A tensile tester (manufactured by A&D Company, Limited) is used as a measuring machine.

Since the first outer layer 12A has a tensile modulus of 0.2 GPa or more, a gap is less likely to be generated between the sheets in a case where the laminated sheet 10 is wound in a roll shape, and a roll surface of the laminated sheet roll can be rolled up in a flat state. On the other hand, since the roll shape is employed, resistance in a case where the sheets are fed out is low, resulting in high workability. Since the first outer layer 12A has a tensile modulus of 10 GPa or less, cracks or breakage on the outer layer are less likely to occur in a case where the laminated sheet 10 is wound in a roll shape. The tensile modulus of the first outer layer 12A is preferably in a range of 0.3 GPa or more and 7 GPa or less, more preferably 0.5 GPa or more and 6 GPa or less, and still more preferably 1 GPa or more and 5 GPa or less.

The laminated sheet 10 can be produced by various methods as long as the laminated sheet 10 can be configured as a laminated sheet including at least two layers. For example, a film produced by TPU for forming the substrate layer 11 being melted is bonded to the outer layer 12A manufactured in a long length to produce the laminated sheet 10. The laminated sheet 10 can also be produced by a solution method, a co-casting method, a co-extrusion method, a laminating method, or the like.

As described above, since the laminated sheet 10 includes the substrate layer 11 and the first outer layer 12A, further functions are imparted as compared with a case where the substrate layer 11 has a single layer structure. The laminated sheet 10 is excellent in daylighting properties and suppresses condensation. Furthermore, since the moisture permeability and the transparency or daylighting properties of the substrate layer 11 made of the thermoplastic polyurethane resin, and the hardness obtained by the combination with the first outer layer 12A with specific tensile modulus are properly achieved, the laminated sheet 10 is excellent in elongation in a case of being unrolled, and an appropriate adhesive prevention property (sticking prevention property) is imparted between the laminated sheets 10. As a result, in a case where the laminated sheet 10 has a roll shape, the laminated sheet 10 can be wound in a state where gaps are less likely to occur between the sheets as compared with the case where the laminated sheet 10 is made of only the substrate layer, and the laminated sheet has low resistance and high workability in a case where the laminated sheet 10 having a roll shape is fed out. In addition, the laminated sheet 10 is excellent in elongation in a case of being unrolled. In addition, in order to prevent adhesiveness between the laminated sheets 10, a method usually used may be applied to the laminated sheet 10, the substrate layer 11, and/or the first outer layer 12A. Specific examples thereof include a method of attaching, for example, a tape for making unevenness on an end part of a sheet, which does not affect the daylighting properties, a method of applying adhesive prevention powder between the sheets.

The laminated sheet 10 can be suitably used as, for example, a covering material for agriculture. As the covering material, for example, since the lining of an agricultural greenhouse has the appropriate moisture permeability as well as the heat-retention properties and daylighting properties, the humidity inside the agricultural greenhouse can be adjusted, which is preferable. The humidity inside the agricultural greenhouse can be appropriately maintained since the condensation on the lining is suppressed, and adverse effects on plants due to the fall of water droplets can be prevented, which is preferable. As described above, the laminated sheet 10 is excellent in the heat-retention properties and daylighting properties, and suppresses the condensation. Therefore, the laminated sheet 10 is a suitable laminated sheet as the covering material for agriculture or the lining of an agricultural greenhouse.

When the laminated sheet 10 is included in a laminated sheet roll, and the resistance in unrolling and winding is small, installation is carried out by unrolling the laminated sheet roll rolled up in a roll shape during the installation, so that the laminated sheet roll has low resistance and high workability in a case where the laminated sheet roll is fed out, which is preferable. In addition, in a case of the laminated sheet 10 in which a gap is less likely to be generated between the sheets in the laminated sheet 10, a roll surface of the laminated sheet roll is wound up in a flat state in a case where the lining is rolled up during the production of the laminated sheet 10 or in order to adjust an environment inside an agricultural greenhouse.

The laminated sheet 10 preferably has a tensile modulus of 0.1 GPa or more. The tensile modulus is determined by the measurement method described above. Since the tensile modulus is 0.1 GPa or more, a gap is less likely to be generated between the sheets in a case where the laminated sheet is rolled up in a roll shape, and the resistance is reduced in a case where the laminated sheet roll is fed out. Therefore, it is easy to work in a case of unrolling and winding or rolling up the laminated sheet roll as the lining of an agricultural greenhouse or the like. For example, in a case where the laminated sheet 10 is unrolled in a roof shape, the sag due to elongation of the sheet is suppressed. The laminated sheet 10 more preferably has a tensile modulus of 0.5 GPa or more, and still more preferably has a tensile modulus of 1 GPa or more.

The laminated sheet 10 preferably has a thickness T10 in a range of 80 µm or more and 300 µm or less. In a case where the thickness T10 is in this range, the moisture permeability as well as the heat-retention properties and daylighting properties is more reliably imparted to the laminated sheet 10. The thickness T10 is more preferably in a range of 90 µm or more and 250 µm or less, and still more preferably in a range of 100 µm or more and 200 µm or less.

The thickness T11 of the substrate layer 11 is preferably in a range of 20 µm or more and 295 µm or less. In a case where the thickness T11 is in this range, a thickness of each layer forming the laminated sheet 10 is adjusted, and the moisture permeability as well as the heat-retention properties and daylighting properties is more reliably imparted without impairing functions of the substrate layer 11 and the first outer layer 12A. The thickness T11 is more preferably in a range of 30 µm or more and 245 µm or less, and still more preferably in a range of 50 µm or more and 195 µm or less.

A thickness T12A of the first outer layer 12A is preferably in a range of 5 µm or more and 100 µm or less. In a case where the thickness T12A is in this range, a thickness of each layer forming the laminated sheet 10 is adjusted, and the moisture permeability and the feeding out and rolling up performance in a case of a roll as well as the heat-retention properties and daylighting properties are more reliably imparted without impairing functions of the substrate layer 11 and the first outer layer 12A. The thickness T12A is more preferably in a range of 10 µm or more and 90 µm or less, and still more preferably in a range of 20 µm or more and 70 µm or less.

The laminated sheet 10 preferably has a heat-retention index of 0.30 or less. The heat-retention index is calculated from an absorbance of far infrared rays of the laminated sheet 10 and is a numerical value of a degree of shielding far infrared rays of the laminated sheet 10, that is, the difficulty of radiative cooling. In the present specification, the heat-retention index is calculated as follows. An infrared absorption spectrum of the laminated sheet 10 is measured every 20 cm⁻¹ in a range of 2000 to 400 cm⁻¹ to obtain light transmittance of each wave number. The infrared absorption spectrum is measured using a Fourier transform infrared spectrophotometer NICORET 4700 (manufactured by Thermo Fisher Scientific Solutions LLC). A blackbody radiation spectrum is obtained by Planck's equation. Next, blackbody radiation energy emissivity is calculated by multiplying light transmittance of the laminated sheet by a blackbody radiation energy of 300 K corresponding to each wave number. The blackbody radiation energy emissivity of each wave number is integrated, and a ratio to the energy of the original blackbody radiation spectrum is taken as a heat-retention index. Therefore, as the heat-retention index is small, the transmission of far infrared rays through the laminated sheet 10 is reduced, and heat from the ground does not escape to the outside since radiative cooling caused by radiating far infrared rays during the night from the ground where the temperature has risen by solar energy during the day is difficult, and heat-retention function is excellent.

The heat-retention index varies depending on a material and thickness of the laminated sheet polymer, and for example, is 0.34 at 150 µm in polyethylene terephthalate (PET), 0.40 at 150 µm in polyolefin, or 0.34 at 60 µm in cellulose acylate. Since thermoplastic polyurethane absorbs a large amount of infrared rays, the heat-retention index is, for example, 0.3 at a thickness of 30 µm. The heat-retention index is preferably 0.20 or less, and particularly preferably 0.10 or less.

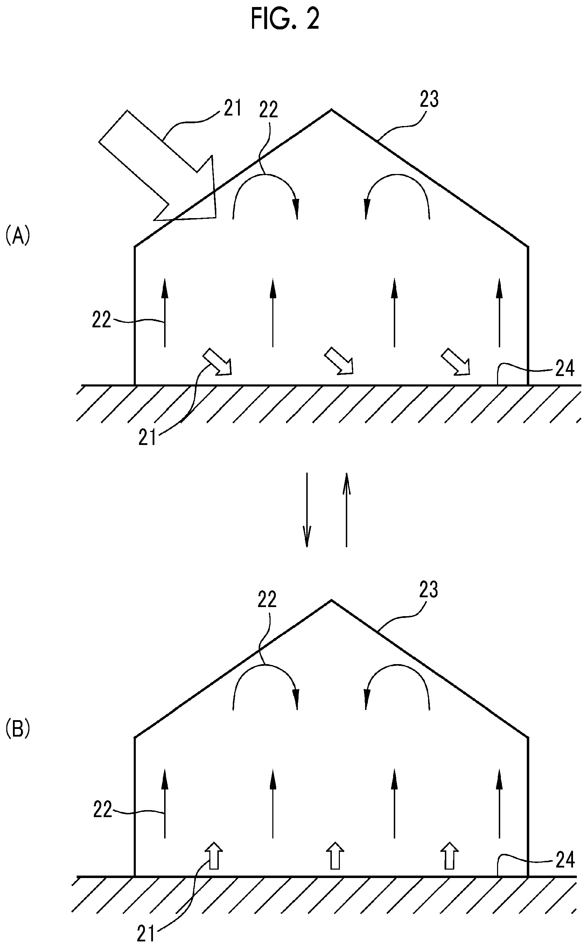

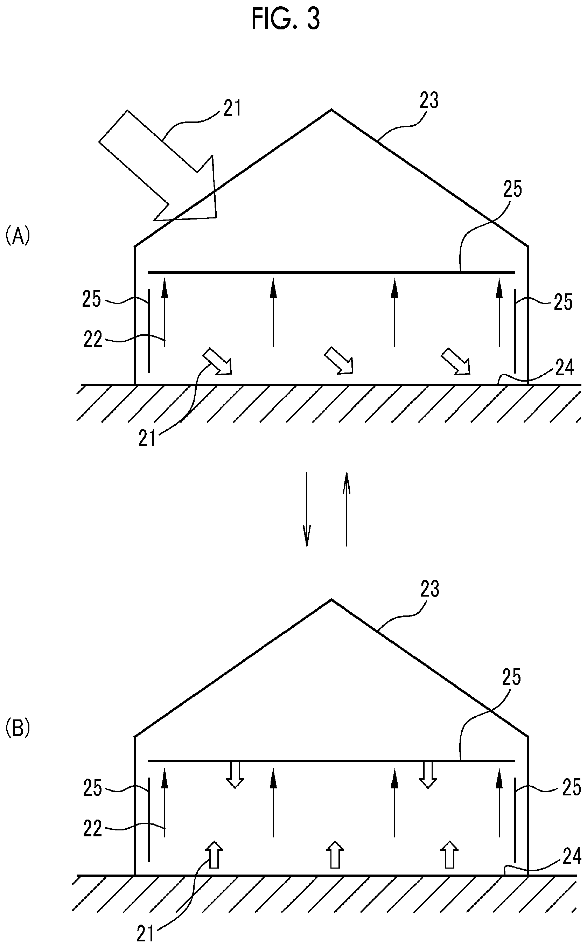

In a case of illustrating the heat-retention function by the laminated sheet 10 having a small heat-retention index, as shown in Fig. 2, in an agricultural greenhouse 23 without a ceiling screen, as shown in (A) of Fig. 2, a light 21 consisting of sunlight or infrared radiation reaches a ground 24 through the transparent agricultural greenhouse 23, warms air inside the agricultural greenhouse 23, and stores heat in the ground 24 during the day. The air warmed by the ground 24 or the like rises, the air reaching the ceiling is cooled by a roof or the like and descends, thereby generating an air convection 22. On the other hand, as shown in (B) of Fig. 2, the sunlight disappears at night, heat stored in the ground radiates, the ground is cooled, the air warmed by the ground and the like rises, and the air that reaches the ceiling is cooled during the night and descends, thereby generating the air convection 22. Due to the air convection 22, the entire interior of the agricultural greenhouse 23 is cooled. Therefore, warming by heating or the like is required. In addition, in a case where there is no humidity adjustment function, condensation generated inside the greenhouse causes diseases and the like. In addition, in Figs. 2 and 3, only some of the reference numerals are given in order to avoid the complexity of the figure.

As shown in Fig. 3, in the agricultural greenhouse 23 including a screen 25 consisting of a ceiling screen and a side screen, as shown in (A) of Fig. 3, in a case where the screen 25 is a net, the light 21 consisting of sunlight or infrared radiation reaches the ground 24 through the transparent agricultural greenhouse 23 and then through the screen 25 that is a net during the day, but the amount of light is smaller than a case where the screen 25 is not provided. The air inside the agricultural greenhouse 23 is warmed, and heat is stored in the ground 24. The air warmed by the ground 24 and the like rises. In the case where the screen 25 is a net, the air reaches the ceiling, is cooled by a roof or the like, and descends, thereby generating air convection.

On the other hand, In a case where the screen 25 is the laminated sheet 10, the amount of light reaching the ground 24 is not reduced since the laminated sheet 10 is transparent. In addition, since the laminated sheet 10 has high moisture permeability, the laminated sheet 10 suppresses excessive humidity of plants and contributes to prevention of condensation or disease. The prevention of condensation means that condensation does not occur even in an environment in which condensation can occur, and as a result, the daylighting properties are further improved. The sunlight reaches the ground 24 through the transparent agricultural greenhouse 23 and then through the screen 25 as the laminated sheet 10, but the decrease in the amount of light is suppressed as compared with the case where the screen 25 is not a net. The air inside the agricultural greenhouse 23 is warmed, and heat is stored in the ground 24. The air warmed by the ground 24 and the like rises. In the case where the screen 25 is the laminated sheet 10, it is suppressed that the air reaches the ceiling, so that the air is difficult to reach the ceiling, resulting in the air being not cooled by the roof or the like.

As shown in (B) of Fig. 3, during the night, the sunlight disappears, the heat stored in the ground radiates, and the ground is cooled, thereby the air warmed by the ground and the like rising. As in the case of the day, in the case where the screen 25 is a net or the like, the air near the ground, which is warmed by heat radiation from the ground or the like, reaches the ceiling, is cooled by the roof or the like, and descends, thereby generating air convection to cool the inside of the agricultural greenhouse 23, and as a result, it is necessary to warm the agricultural greenhouse 23 by heating. In addition, in a case where the screen 25 is a polyolefin film or the like having a relatively high heat-retention index, the transmission of far infrared rays through the screen 25 increases, radiative cooling easily proceeds, and heat from the ground may escape to the outside.

In a case where the screen 25 is the laminated sheet 10, warm air near the ground is difficult to reach the ceiling, and the air is not cooled by the roof or the like. Since the heat-retention index of the laminated sheet 10 is low, the transmission of far infrared rays through the laminated sheet 10 is low, radiative cooling is difficult, and heat from the ground does not escape to the outside. Therefore, warming by heating can be suppressed. The laminated sheet 10 has high moisture permeability and suppresses excessive humidity of plants, so that condensation is suppressed. The side screen also has the same effect as the ceiling screen as described above. Therefore, in a case where the screen 25 is the laminated sheet 10 having a small heat-retention index, a better heat-retention function is exhibited.

The first outer layer 12A preferably absorbs moisture. Since the first outer layer 12A absorbs moisture, the antifogging properties, drip-proofness, or fog suppression effect of the laminated sheet 10 is improved in combination with the moisture permeability of the substrate layer 11. The moisture absorption of the first outer layer 12A can be measured by, for example, an equilibrium moisture content of the first outer layer 12A. Regarding the equilibrium moisture content of the outer layer 12, the equilibrium moisture content at a temperature of 25°C and 80%RH is preferably in a range of 1% or more and 20% or less. In a case where the equilibrium moisture content of the first outer layer 12A is in this range, the outer layer 12A absorbs more moisture, and the deformation of the first outer layer 12A due to the moisture absorption is suppressed, which is preferable. In addition, in the case where the equilibrium moisture content of the first outer layer 12A is in this range, in combination with the moisture permeability of the substrate layer 11, the moisture absorption and moisture release during drying are appropriately performed as the entire laminated sheet 10, so that the laminated sheet 10 is particularly preferably used as a covering material for agriculture such as a lining of an agricultural greenhouse.

The humidity conditioning is performed on the first outer layer 12A under a condition of a temperature of 25°C and 80%RH for 24 hours, a 500 mg sample obtained from the first outer layer 12A is then subjected to sampling, and the sample is measured with a Karl Fischer moisture meter (AQ-2200, manufactured by HIRANUMA Co., Ltd.) to obtain the equilibrium moisture content. The equilibrium moisture content of the first outer layer 12A is more preferably in a range of 2% or more and 10%, and still more preferably in a range of 3% or more and 8%.

It is preferable that a contact angle of the first outer layer 12A 15 seconds after pure water is added dropwise on a surface of the first outer layer 12A is 50° or less. The contact angle after 15 seconds is a contact angle 15 seconds after pure water is added dropwise. The contact angle can be determined by a liquid droplet method. By adopting the contact angle of 50° or less, hydrophilicity of the first outer layer 12A is high, and even in a case where liquid droplets adhere, the liquid droplets do not fall as water droplets, thereby improving the drip-proofness. The contact angle after 15 seconds is more preferably 40° or less, and still more preferably 30° or less.

A resin forming the first outer layer 12A is preferably cellulose acylate. In a case where the first outer layer 12A is formed of cellulose acylate, an absorption function by moisture absorption properties can be imparted to the first outer layer 12A in addition to suitably exhibiting the physical properties of the moisture permeability and transparency. Hereinafter, the first outer layer 12A formed of cellulose acylate is referred to as a cellulose acylate outer layer 12Ac.

The cellulose acylate preferably has an acyl group substitution degree in a range of 2.00 or more and 2.97 or less from the viewpoint of the moisture permeability and moisture absorption properties. The acyl group substitution degree can be determined by a commonly used method. For example, an acetylation degree (acetyl group substitution degree) is determined according to the measurement and calculation of the acetylation degree in ASTM:D-817-91 (test method of cellulose acetate or the like). The acyl group substitution degree can also be measured by distribution measurement of the acylation degree (acyl group substitution degree) with high performance liquid chromatography. As an example of this method, in the measurement of the acetylation degree of cellulose acetate, a sample is dissolved in methylene chloride, and a distribution of an acetylation degree is measured using a column Novapac phenyl (Waters) by a linear gradient from a mixed liquid (mass ratio of methanol:water is 8:1) of methanol and water which is an eluant to a mixed liquid (mass ratio of dichloromethane:methanol is 9:1) of dichloromethane and methanol, and compared with a calibration curve obtained from a standard sample having a different acetylation degree. These measurement methods can be obtained with reference to methods described in JP2003-201301A. Regarding the measurement of an acetylation degree of cellulose acylate, in a case where cellulose acylate composing the cellulose acylate outer layer 12Ac contains an additive, high performance liquid chromatography is preferably performed.

It is more preferable that all the acyl groups are acetyl groups in cellulose acylates, that is, the cellulose acylate is cellulose acetate, and particularly preferably cellulose triacetate (triacetyl cellulose (TAC)). A layer (film) formed of cellulose acylate has an equilibrium moisture content in a range of 1% or more and 20% or less at a temperature of 25°C and 80%RH, and has a moisture permeability in a range of 200 g/m²·day or more and 2000 g/m²·day or less.

The cellulose acylate outer layer 12Ac is formed only of cellulose acylate, but may include other components in addition to cellulose acylate. A content of components other than cellulose acylate in the cellulose acylate outer layer 12Ac in terms of mass is preferably 0 or more and 50 or less in a case where the mass of cellulose acylate is 100. Other components include, for example, an additive. Examples of the additive include an ultraviolet absorber, a plasticizer, a matting agent, and the like.

In a case where the cellulose acylate outer layer 12Ac is used, the laminated sheet 10 can be produced as follows. First, the cellulose acylate outer layer 12Ac is produced in a long length by a well-known solution film forming method. A film that is produced by TPU being melted to be the substrate layer 11 is melted and formed into a film on the cellulose acylate outer layer 12Ac. A dope in which cellulose acylate is dissolved in a solvent is casted on a long belt that moves continuously to form a cast film, and the cast film is dried and then peeled off and is further dried, to form the cellulose acylate outer layer 12Ac. A drum may be used instead of the belt to cool and/or dry the cast film on the drum before peeling.

In a case of a lamination method, the laminated sheet 10 can be produced by a method in which the cellulose acylate films that are materials of the cellulose acylate outer layer 12Ac are laminated on a long TPU film that is the substrate layer 11. In the case of lamination, an adhesive may be used between the TPU film and the cellulose acylate film.

In a case of a melting method, TPU to be the substrate layer 11 is melted by a heat extruder, and then casted on a cellulose acylate film using a T-die to obtain a TPU film to be the substrate layer 11. In a case where the T-die is used, a production can be carried out in such a manner that, for example, a cellulose acylate film and a protective film such as a polyethylene film are prepared to pass through, for example, a T-die extruder, and a molten material of TPU is extruded to be sandwiched between the cellulose acylate film and the protective film by an extrusion nip formed with a rubber roller and/or a steel roller. The method using a protective film is preferable since the protective film to be used can be selected to make the surface of the substrate layer 11 made of TPU smoother.

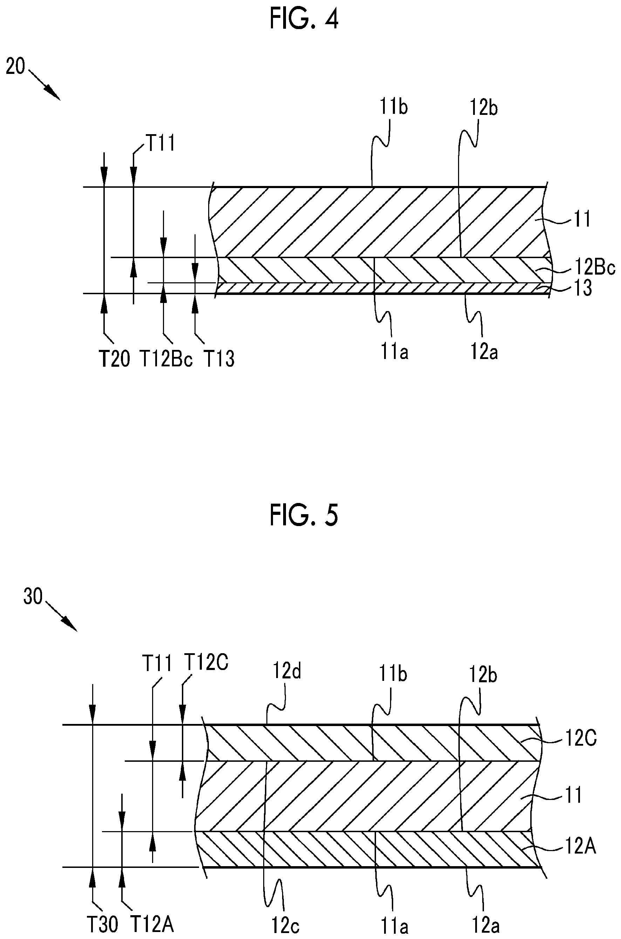

The laminated sheet is not limited to the above examples, and may have the following configuration, for example. As shown in Fig. 4, a laminated sheet 20 further includes a saponified layer 13. The laminated sheet 20 includes the saponified layer 13 that is provided on the laminated sheet 10.

The saponified layer 13 is also formed of cellulose acylate, and is formed by saponifying a surface of the cellulose acylate outer layer 12Ac in the laminated sheet 10. Depending on the degree of saponification, the saponified layer 13 may contain cellulose. That is, the saponified layer 13 is formed of cellulose acylate and/or cellulose. A thickness T13 of the saponified layer 13 is preferably in a range of 0.1 µm or more and 20.0 µm or less, and is approximately 0.3 µm in this example.

In the present embodiment, the laminated sheet 20 including the saponified layer 13 is produced by the following method. An aqueous solution of sodium hydroxide and/or potassium hydroxide is brought into contact with a surface 12a of the above described cellulose acylate film to form the saponified layer 13. A coating liquid containing TPU that forms the substrate layer 11 is applied to an opposite surface 12b of the cellulose acylate film on which the saponified layer 13 is formed to the surface 12a on which the saponified layer 13 is provided. The formed coating film is dried to obtain the laminated sheet 20 including the saponified layer 13.

Therefore, in this case, for example, the cellulose acylate film before saponification, which is the cellulose acylate outer layer 12Ac of the laminated sheet 10, is formed with a cellulose acylate layer 12Bc of the laminated sheet 20 including the saponified layer 13 and the saponified layer 13. In addition, a thickness T12Ac of the cellulose acylate outer layer 12Ac before saponification is the sum of the thickness T12Ac of the cellulose acylate layer after saponification and the thickness T13 of the saponified layer 13. The laminated sheet 20 including the saponified layer 13 can also be produced by a melting method, a laminating method, or the like.

The laminated sheet may have the following configuration, for example. As shown in Fig. 5, a laminated sheet 30 includes a second outer layer 12C in addition to the first outer layer 12A. The substrate layer 11 and the second outer layer 12C are in close contact with each other, and the second outer layer 12C is provided to cover the other surface 11b of the substrate layer 11. The second outer layer 12C is arranged over the other entire surface 11b of the substrate layer 11. Therefore, the outer layer is arranged over entire surfaces on both sides of the substrate layer 11. The first outer layer 12A and the second outer layer 12C may be layers having different types or thicknesses from each other, or may be the same layer.

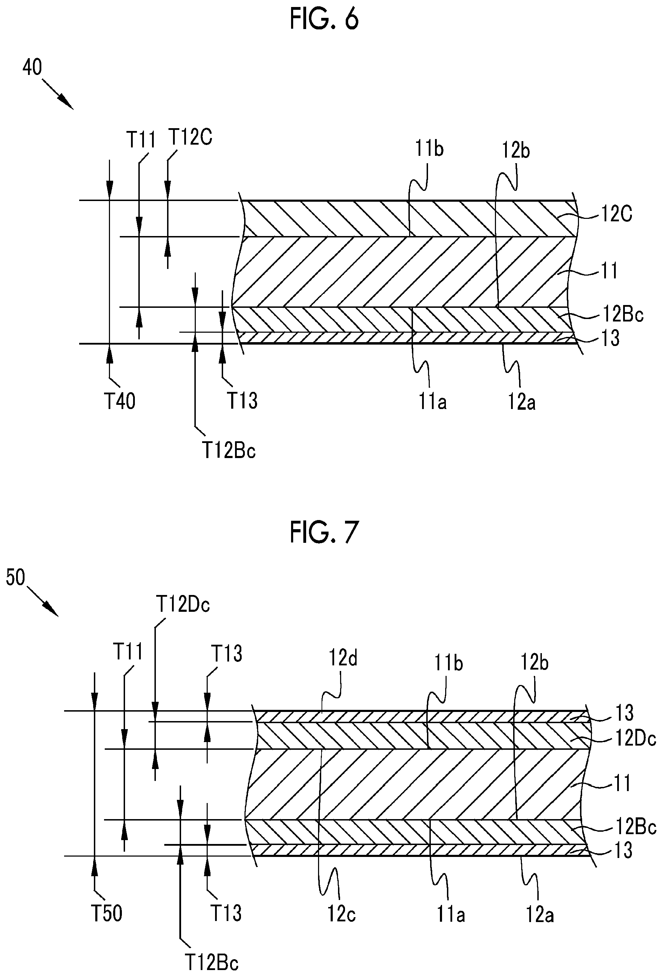

The laminated sheet 30 may be configured to include one saponified layer 13. In Fig. 6, a laminated sheet 40 includes the saponified layer 13 that is provided on the laminated sheet 30. The saponified layer 13 is also formed of cellulose acylate, and is formed by saponifying a surface of the cellulose acylate outer layer 12Ac in the laminated sheet 30. The composition, thickness, producing method, and the like of the saponified layer are the same as in the case of the laminated sheet 20. The laminated sheet 40 including the saponified layer 13 can also be produced by a melting method, a laminating method, or the like.

The laminated sheet 30 may be configured to include two saponified layers 13. In Fig. 7, a laminated sheet 50 includes two saponified layers 13 that are provided on the laminated sheet 30. The laminated sheet 50 includes the substrate layer 11 between the cellulose acylate layer 12Bc and a cellulose acylate layer 12Dc, and further includes the saponified layer 13 as each outermost layer of the laminated sheet 30. The saponified layer 13 is also formed of cellulose acylate, and is formed by saponifying each of surfaces of the cellulose acylate outer layer 12Ac and a cellulose acylate outer layer 12Cc in the laminated sheet 30. The composition and thickness of the saponified layer are the same as in the case of the laminated sheet 20.

The laminated sheet 50 can be produced by the following method. Two long cellulose acylate films are prepared. The two cellulose acylate films are subjected to saponification treatment to form the saponified layer 13 in the same manner as in the case of producing the laminated sheet 20. A coating liquid containing TPU that forms the substrate layer 11 is applied to an opposite surface of the cellulose acylate film on which the saponified layer 13 is formed to the surface on which the saponified layer 13 is provided. The formed coating film is dried to be a state in which the solvent remains (semi-dried state) as compared with the case of producing the laminated sheet 30. Another cellulose acylate film is laminated on the semi-dried coating film, and the coating film is dried in a laminated state, thereby obtaining the laminated sheet 50.

The laminated sheet 50 can also be produced by a melting method, a laminating method, or the like. In the melting method, a molten material of TPU of the substrate layer 11 is melted by an extruder, and then casted on one cellulose acylate film using a T-die to obtain the substrate layer 11, and thereafter, the other cellulose acylate film is laminated before the temperature of the substrate layer 11 decreases. The two cellulose acylate films are saponified in advance. In the laminating method, cellulose acylate is laminated on each of one surface and the other surface of the TPU film to be the substrate layer 11, and lamination is carried out. In this case, an adhesive may be used between the cellulose acylate and the TPU film. The laminated sheet 50 can also be produced by any of a coating method, a melting method, or a laminating method in the same manner as in the case of other laminated sheets.

Hereinafter, applications of the laminated sheet will be described. As for the applications, unless otherwise specified, an example in which the laminated sheet 10 is used on behalf of the laminated sheet of the present invention will be described. Therefore, the laminated sheet 10 can be used in the same manner even though the laminated sheet 10 is replaced with the laminated sheet 20, 30, 40, or 50. The produced laminated sheet 10 has a long length and is wound in a roll shape to form a laminated sheet roll. For winding, a shaft member is used and the laminated sheet 10 is wound around the shaft member to form the laminated sheet roll.

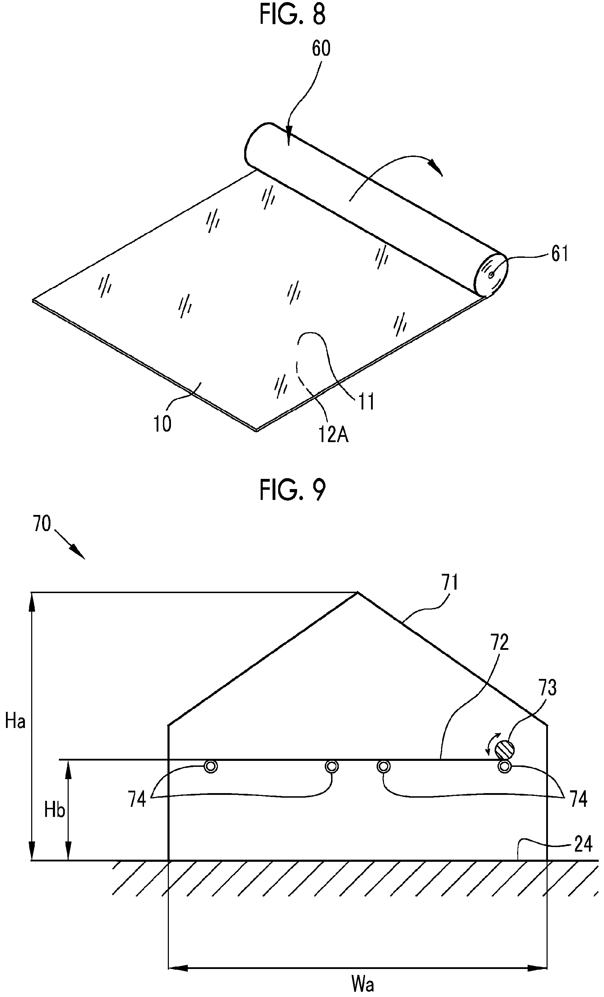

As shown in Fig. 8, the laminated sheet 10 is wound around a winding core 61 as a shaft member to form a laminated sheet roll 60. The laminated sheet roll 60 is preferably wound so that the outside is the outer layer of the laminated sheet 10. As a result, for example, in a case where the laminated sheet roll 60 is unrolled as a ceiling screen of an agricultural greenhouse, the laminated sheet roll 60 is rolled and installed in a direction of the arrow in Fig. 8, thereby the outer layer 12A of the laminated sheet 10 capable of being unrolled in a state of facing the inside of the agricultural greenhouse, which is preferable in that the installation is facilitate. For the same reason, in a case where the laminated sheet 20 including the saponified layer 13 is used, it is preferable to wind the laminated sheet 20 so that the saponified layer 13 is positioned on the outside of the laminated sheet roll 60.

The laminated sheet roll 60 is unrolled to be used as a lining screen of an agricultural greenhouse configured to be unrollable and windable. The lining screen includes a ceiling screen and a side screen. The screen may also be used as a curtain.

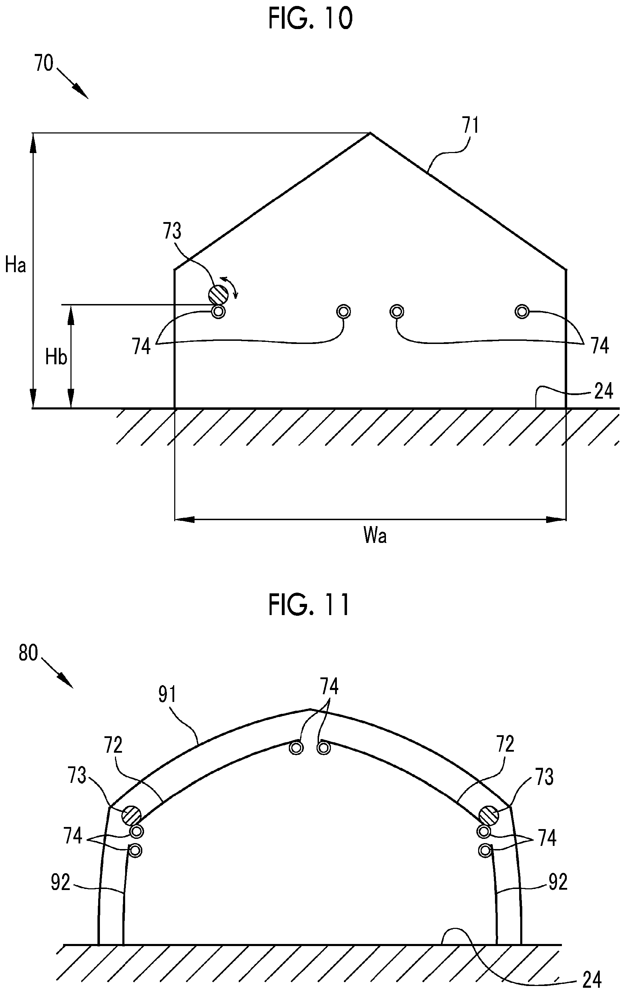

As shown in Fig. 9, an agricultural greenhouse 70 includes a glass outer lining 71 and has a depth of 20 m, a height Ha of 5 m, and a width Wa of 6 m in the vertical direction in Fig. 9 on the paper. In the agricultural greenhouse 70, the laminated sheet roll 60 is unrolled inside the glass outer lining 71 as a lining, and the laminated sheet 10 is used as a ceiling screen 72. The laminated sheet roll 60 is configured to be unrollable and windable by using a winder 73. The winder 73 rotates in the direction of the arrow to wind or unroll the ceiling screen 72 while being supported by the pipe 74. As shown in Fig. 10, in an agricultural greenhouse 80, the ceiling screen 72 can be wound by the winder 73, and thereafter, the ceiling screen 72 can be fed out and unrolled by the winder 73.

As shown in Fig. 11, an agricultural greenhouse 90 includes a polyolefin outer lining 91. In the agricultural greenhouse 80, the laminated sheet roll 60 is unrolled inside the polyolefin outer lining 91, and the laminated sheet 10 is used as the ceiling screen 72. In the agricultural greenhouse 90, the ceiling screen is divided into a right part and a left part. In the ceiling screen 72, the laminated sheet 10 is supported by a pipe 74. Similar to the agricultural greenhouse 70, the ceiling screen 72 can be wound or unrolled by the winder 73. The laminated sheet roll 60 is used not only as the ceiling screen 72 but also as a side screen 92 of the lining. The side screen 92 has a curtain shape and is supported by the pipe 74. In a case where the side screen 92 is not used, the side screen 92 is assembled and fixed to the pipe 74. The side screen 92 may be divided in the vertical direction of the paper surface, assembled, and fixed as a curtain.

As a method of using the laminated sheet 10, in the agricultural greenhouse, the laminated sheet is installed between ground and the agricultural greenhouse so that the outer layer of the laminated sheet is disposed inside the agricultural greenhouse. For example, in the laminated sheet 20, 40, or 50 including the saponified layer 13, the laminated sheet 20, 40, or 50 is installed between the ground and the agricultural greenhouse so that the saponified layer 13 is disposed inside the agricultural greenhouse. Therefore, the laminated sheet 10 further improves the hydrophilicity on an inner wall surface of the agricultural greenhouse. The laminated sheet 20 or 40 is provided so that the saponified layer 13 is positioned on the inside of the agricultural greenhouse, and the substrate layer 11 is positioned on the outside.

Since the saponified layer 13 is formed by saponification of the cellulose acylate as described above, the hydrophilicity thereof is higher than the first outer layer 12A. Therefore, in the laminated sheet 20, 40, or 50, condensation is further suppressed on a surface on which the saponified layer 13 is provided in a case of being used in the agricultural greenhouse 70 or 80. Since the saponified layer 13 is formed of cellulose acylate and/or cellulose as described above, the saponified layer 13 has moisture permeability similar to the first outer layer 12A. Therefore, the laminated sheet 20, 40, or 50 including the saponified layer 13 exhibits high moisture permeability and good workability in a case of being unrolled due to the synergistic effect with the substrate layer 11 similar to the laminated sheet 10 without the saponified layer 13. Since the laminated sheet 20, 40, or 50 including the saponified layer 13 is provided with the first outer layer 12A, a function of preventing adhesion between the laminated sheets 20, 40, or 50 is provided. In addition, in a case where the laminated sheet roll 60 is applied, the laminated sheet 20, 40, or 50 can be wound in a state where a gap between the sheets is less likely to be generated as compared with the case of adopting only the substrate layer 11, and the resistance is reduced and the workability is high in a case where the laminated sheet 20, 40, or 50 in a roll shape is fed out.

The above example is the case where the laminated sheet 10, 20, 40, or 50 is used as a covering material that is a lining screen of an agricultural greenhouse.

### Examples

### [Example 1] to [Example 11]

The laminated sheet 10, 30, or 50 with a long length was produced, each was used as a laminated sheet roll 60, and used as Examples 1 to 11. Each of Examples 1 to 5, 10, and 11 is the laminated sheet 30, Example 6 is the laminated sheet 50, and each of Examples 7 to 9 is the laminated sheet 10.

In Table 1, "Substrate layer" is the substrate layer 11, "Outer layer A" is the first outer layer 12A except for Example 6, and in Example 6, the cellulose acylate layer 12Bc and the saponified layer 13 correspond to "Outer layer A". "Outer layer B" is the outer layer 12C except for Example 6, and in Example 6, the cellulose acylate layer 12Dc and the saponified layer 13 correspond to "Outer layer B". "All layers" indicates the laminated sheets 10, 30, or 50.

The "Material" column of "Substrate layer" in Table 1 shows the followings.
Urethane A; Polyurethane (Elastran (registered trademark) NY515N11A, manufactured by BASF SE)
Commercially available product A; Fluorine-based polymer film (Fclean (registered trademark) natural light, manufactured by AGC Green-Tech Co.,Ltd.)
Commercially available product B; Ethylene-vinyl acetate-vinyl alcohol copolymer (Diastar (registered trademark) 0.15 mm, manufactured by Mitsubishi Chemical Agri Dream Co.,Ltd.)
Commercially available product C; Polyvinyl alcohol-based film (laminated product of PVA film and transparent polycloth) (KARA NU-KU, 14µ, manufactured by TOKYO PRINTING INK MFG CO.,LTD.)
Commercially available product D; Polyvinyl alcohol-based film (laminated product of PVA film and transparent polycloth) (KARA NU-KU, 25µ, manufactured by TOKYO PRINTING INK MFG CO.,LTD.)
Commercially available product E; Polyethylene-based net sheet, (Sunshine, NST-5500, manufactured by Dio Chemicals, Ltd.)

The "Material" columns of "Outer layer A" and "Outer layer B" in Table 1 indicate the followings, respectively.

TAC; a substrate having a width of 1.5 m was produced by a solution film forming device, and a length of 2000 m was wound by a winder to be used in Examples. The formulation of a dope that is a material of the substrate is as follows. The following solid content is a solid component constituting the substrate.

| | |
|---|---|
| First component of solid content | 100 parts by mass |
| Second component of solid content | 7 parts by mass |
| Third component of solid content | 1.3 parts by mass |
| Dichloromethane (first component of solvent) | 635 parts by mass |
| Methanol (second component of solvent) | 125 parts by mass |

The first component of the solid content is cellulose acylate, all acyl groups are acetyl groups, and a viscosity average degree of polymerization is 320. An acyl group substitution degree of cellulose acylate is 2.85. The second component of the solid content is a benzoic acid ester of sucrose (Monopet (registered trademark) SB, manufactured by DKS Co., Ltd.), which is a plasticizer for cellulose acylate. The third component of the solid content is silica fine particles (R972, manufactured by NIPPON AEROSIL CO., LTD.). An equilibrium moisture content of this TAC was 4.2%.

TAC + saponification; TAC was saponified by a dipping method. The saponification treatment was carried out under the following conditions. TAC was dipped in a NaOH aqueous solution having a concentration of 1.5 mol/L at a temperature of 50°C and a dipping time of 180 seconds. Then, in a first washing step, TAC was dipped in and washed with pure water at a temperature of 25°C for 15 seconds, a neutralization step was carried out with a sulfuric acid aqueous solution (H₂SO₄ aq) having a concentration of 0.3 mol/L at a temperature of 25°C, in a second washing, TAC was dipped in and washed with pure water at a temperature of 25°C for 15 seconds, and in a drying step, TAC was dried at 140°C for 60 seconds.

Nylon; Harden (registered trademark) film (manufactured by TOYOBO CO., LTD.) was used. An equilibrium moisture content was 3.0%.

PVA; A mixture of GOHSENEX Z-220 (acetoacetyl-modified polyvinyl alcohol (PVA, polymerization degree: 1200, saponification degree: 90.5 to 92.5, manufactured by Nippon Synthetic Chemical Industry Co., Ltd.)), NIKALAC MX-035 (Nippon Carbide Industries Co., Ltd., methylol melamine resin cross-linking agent) (manufactured by Nissan Chemical Co., Ltd.), Snowtex (registered trademark) O33 (coloidal silica, average primary particle diameter: 10 nm to 15 nm, manufactured by Nissan Chemical Corporation), 70% by mass of concentration, and p-toluene sulfonic acid (manufactured by Wako Pure Chemical Industries, Ltd), which are mixed at a ratio of 38:4:50:0.4, was used. An equilibrium moisture content of PVA was 10.0%.

Urethane B; Desmopan (registered trademark) DP88586 (manufactured by DIC Covestro Polymer Ltd.). An equilibrium moisture content was 0.4%.

Regarding "Substrate layer", "Outer layer A", "Outer layer B", and "All layers", the tensile modulus was determined by the above described method and is shown in Table 1. The tensile modulus is described in the "Elastic modulus" column of Table 1. Regarding "All layers", the moisture permeability, haze, total light transmittance, parallel light transmittance, and heat-retention index were further determined and are shown in Table 1. All of the measurement methods are the above described methods. In "Evaluation", the heat-retention index, stickiness, and elongation in a case of being unrolled were evaluated for the laminated sheet 10, 30, or 50 with a long length, and the laminated sheet roll 60 of each of the laminated sheet 10, 30, and 50. Each of the calculation methods, evaluation methods, and evaluation standards is as follows. The results are shown in Table 1. In addition, in Table 1, "-" indicates no corresponding.

### 1. Stickiness

The laminated sheet roll 60 was obtained by the laminated sheet 10, 30, or 50 being wound around a winding core having a width of 1.2 m. In a case where the sheet was taken from each laminated sheet roll 60, based on a shape in which the laminated sheets were pulled with both hands, the sheet stickiness was evaluated according to the following criteria. A and B pass, and C fails.
A: Resistance is small in case where sheet is peeled off from roll.
B: There is resistance in case of peeling sheet from roll, but sheet can be peeled off without deformation.
C: Resistance is large in case of peeling sheet from roll, and sheet is deformed.

### 2. Elongation in case of Unrolling

The laminated sheet roll 60 was obtained by each of the laminated sheet 10, 30, and 50 being wound around a winding core having a width of 2 m. Five laminated sheets 20 m obtained from the sheet roll 60 were unrolled side by side in the agricultural greenhouse 70 (see Fig. 9) which is a glass house. One month later, sagging of the laminated sheets and a gap between the laminated sheets were observed and evaluated according to the following criteria. The gap includes a gap between the laminated sheets, and in a case where the laminated sheets hang down greatly, the gap between the laminated sheets is large. A and B pass, and C fails.
A: There is little sagging of sheets, and there is almost no gap between sheets.
B: Sheet hangs down a little, but gap between sheets is small.
C: Sheet hangs down greatly, and gap between sheets is large.

**[Table 1]**

| | Substrate layer | | | Outer layer A | | | Outer layer B | | | All layers | | | | | | | Evaluation | |
|---|---|---|---|---|---|---|---|---|---|---|---|---|---|---|---|---|---|---|
| | Thickness µm | Material | Elastic modulus Gpa | Thickness µm | Material | Elastic modulus Gpa | Thickness µm | Material | Elastic modulus Gpa | Thickness µm | Elastic modulus Gpa | Moisture permeability g/m²·24 h @40°C· 90%RH | Haze % | Total light transmittance % | Parallel light transmittance % | Heat-retention index | Stickiness | Elongation in case of Unrolling |
| Example 1 | 70 | Uretane A | 0.02 | 40 | TAC | 4 | 40 | TAC | 4 | 150 | 2.5 | 320 | 0.6 | 92.6 | 92.0 | 1.2 × 10⁻⁴ | A | A |
| Example 2 | 30 | Uretane A | 0.02 | 40 | TAC | 4 | 40 | TAC | 4 | 110 | 3.0 | 390 | 0.6 | 92.5 | 91.9 | 0.072 | A | A |
| Example 3 | 110 | Uretane A | 0.02 | 40 | TAC | 4 | 40 | TAC | 4 | 190 | 2.0 | 270 | 0.5 | 92.3 | 91.8 | 5.6 × 10⁻⁵ | A | A |
| Example 4 | 110 | Uretane A | 0.02 | 60 | TAC | 4 | 60 | TAC | 4 | 230 | 2.2 | 210 | 0.4 | 92.5 | 92.1 | 4.2 × 10⁻⁵ | A | A |
| Example 5 | 140 | Uretane A | 0.02 | 80 | TAC | 4 | 80 | TAC | 4 | 300 | 2.3 | 210 | 0.4 | 92.5 | 92.1 | 4.0 × 10⁻⁶ | A | A |
| Example 6 | 70 | Uretane A | 0.02 | 40 | TAC + saponification | 4 | 40 | TAC + saponification | 4 | 150 | 2.4 | 325 | 0.8 | 92.5 | 91.9 | 9.8 × 10⁻⁵ | A | A |
| Example 7 | 70 | Uretane A | 0.02 | 60 | TAC | 4 | - | - | - | 130 | 1.9 | 380 | 1.5 | 91.8 | 90.3 | 1.8 × 10⁻⁴ | B | A |
| Example 8 | 70 | Uretane A | 0.02 | 40 | TAC | 4 | - | - | - | 110 | 1.5 | 480 | 1.7 | 91.4 | 89.8 | 2.0 × 10⁻⁴ | B | A |
| Example 9 | 70 | Uretane A | 0.02 | 25 | Nylon | 1.2 | - | - | - | 95 | 0.3 | 130 | 2.2 | 90.8 | 87.5 | 2.2 × 10⁻⁴ | B | B |
| Example 10 | 70 | Uretane A | 0.02 | 10 | PVA | 0.7 | 10 | PVA | 0.7 | 90 | 0.2 | 145 | 1.0 | 91.5 | 90.3 | 1.9 × 10⁻⁴ | A | B |
| Example 11 | 70 | Uretane A | 0.02 | 50 | Uretane B | 0.5 | 50 | Uretane B | 0.5 | 170 | 0.3 | 192 | 1.4 | 91.2 | 88.3 | 9.0 × 10⁻⁵ | A | B |
| Cmparative Example 1 | 110 | Uretane A | 0.02 | - | - | - | - | - | - | 110 | 0.02 | 400 | 2.2 | 91.0 | 89.4 | 6.6 × 10⁻⁵ | C | C |
| Comparative Example 2 | Commercially available product A | | | - | - | - | - | - | - | 100 | 0.95 | 8 | 6.2 | 92.2 | 84.2 | 0.35 | A | A |
| Comparative Example 3 | Commercially available product B | | | - | - | - | - | - | - | 152 | 0.13 | 3 | 21.3 | 91.4 | 71.9 | 0.40 | A | B |
| Comparative Example 4 | Commercially available product C | | | - | - | - | - | - | - | 130 | 0.5 | 240 | 28.8 | 88.8 | 62.3 | 0.38 | A | B |
| Comparative Example 5 | Commercially available product D | | | - | - | - | - | - | - | 150 | 0.6 | 126 | 30.5 | 87.6 | 61.5 | 0.20 | A | B |
| Comparative Example 6 | Commercially available product E | | | - | - | - | - | - | - | 190 | 1.2 | 9940 | 35.3 | 95.6 | 61.9 | 0.80 | A | A |

### [Comparative Example 1] to [Comparative Example 6]

A film using a film consisting of the materials shown in Table 1 and having a single-layer configuration was employed as Comparative Example 1. The commercially available products shown in Table 1 were employed as Comparative Examples 2 to 6. These were measured and evaluated by the same methods and criteria as in Examples 1 to 11. The results are shown in Table 1.

### [Example 12] and [Example 13]

The agricultural greenhouse 70 was constructed by using a part of the laminated sheet roll 60 using the laminated sheet 30 or 10 produced in Examples 1 and 9, and cultivation was carried out. Specifically, the agricultural greenhouse 70 (see Fig. 9), which is a glass house having a width of Wa 6.0 m, a depth of 20.0 m, and a height of Ha 5.0 m, was produced in Kanagawa prefecture. In the agricultural greenhouse 70, tomatoes were cultivated by hydroponics. At a 2 m position of a height of Hb in the agricultural greenhouse 70, the laminated sheet 30 or 10 was fed out by a roll feeding device including the winder 73 and unrolled to be the ceiling screen 72. The ceiling screen 72 was unrolled in a state where the first outer layer 12A faces the ground 24, that is, a state where the first outer layer 12A is disposed inside the agricultural greenhouse 70. Cultivation was carried out from October to March of the following year in the state where the ceiling screen 72 was unrolled. In the agricultural greenhouse 70, heating was used after January, and the temperature was controlled in a range of 20°C to 25°C during the day and 10°C to 15°C during the night.

In the agricultural greenhouse 70, the day light transmission, condensation, and heat-retention effect were evaluated by the following methods. The evaluation results are shown in Table 2.

### 3. Day Light Transmission

The visible light illuminance was measured in a place without shadows of members or the like in the agricultural greenhouse 70 in fine weather. As the illuminometer, TR74Ui (manufactured by T&D Co., Ltd.) was used. The illuminance inside the agricultural greenhouse 70 was calculated as a ratio to the illuminance outside the agricultural greenhouse 70 (outside light) and evaluated according to the following criteria. A and B pass, and C fails. The results are shown in the "Day light transmission" column of Table 2.
A: 80% or more of outside light
B: 60% or more of outside light
C: 60% or less of outside light

### 4. Condensation

In the agricultural greenhouse 70, a condensation state on the ceiling screen 72 during cultivation from November to December was observed and evaluated according to the following criteria. A and B pass, and C fails. The results are shown in the "Condensation" column of Table 2.
A: There is no condensation day and night.
B: There is condensation only in early morning.
C: There is condensation.

### 5. Heat-retention Effect

The heating costs in January were compared between a case where the ceiling screen 72 of Example 12 in the agricultural greenhouse 70 was installed and the case where the agricultural greenhouse in which the ceiling screen was not installed is a glass house. The heating cost in Example 12 was 70% of the heating cost in the agricultural greenhouse without the ceiling screen.

**[Table 2]**

| | Laminated sheet (Number of Example) | Moisture permeability g/m²·24 h @40°C· 90%RH | Thickness µm | Unrolling height | Evaluation | |
|---|---|---|---|---|---|---|
| | | | | | Day light transmission | Condensation |
| Example 12 | Example 1 | 320 | 150 | 2m height | A | A |
| Example 13 | Example 9 | 130 | 95 | 2m height | A | B |
| Comparative Example 7 | Comparative Example 2 | 8 | 100 | 2m height | B | C |
| Comparative Example 8 | Comparative Example 3 | 3 | 152 | 2m height | B | C |
| Comparative Example 9 | Comparative Example 5 | 126 | 150 | 2m height | C | B |

### [Comparative Example 7] to [Comparative Example 9]

The agricultural greenhouse 70 was constructed using the commercially available products of Comparative Examples 2, 3, and 5, and cultivation was carried out. The agricultural greenhouse 70 was prepared in the same manner as in Examples 12 and 13, and tomatoes were cultivated by hydroponics. In this case, a commercially available sheet was fed out and unrolled in the same manner as in Examples 12 and 13 to form a ceiling screen. The cultivation was carried out from October to March of the following year. In the agricultural greenhouse 70, heating was used after January, and the temperature was controlled in a range of 20°C to 25°C during the day and 10°C to 15°C during the night.

In the agricultural greenhouse 70, the day light transmission, condensation, and heat-retention effect were evaluated by the same methods and criteria as in Examples 12 and 13. The evaluation results are shown in Table 2.

### Explanation of References

10, 20, 30, 40, 50: laminated sheet
11: substrate layer
11a: one surface of substrate layer
11b: the other surface of substrate layer
12A: first outer layer
12Bc, 12Dc: cellulose acylate layer
12C: second outer layer
12a, 12c: one surface
12b, 12d: the other surface
13: saponified layer
21: light
22: air convection
23: agricultural greenhouse
24: ground
25: screen
60: laminated sheet roll
61: winding core
70, 80: agricultural greenhouse
71: glass
72: ceiling screen
73: winder
74: pipe
91: polyolefin film
92: side screen
Ha: height of agricultural greenhouse
Hb: height of ceiling screen
Wa: width of agricultural greenhouse
T10, T20, T30, T40, T50: thickness of laminated film
T11: thickness of substrate layer
T12A: thickness of first outer layer
T12Bc, T12Dc: thickness of cellulose acylate layer
T12C: thickness of second outer layer
T13: thickness of saponified layer

## Claims

1. A laminated sheet roll which is a lining screen of an agricultural greenhouse and is configured to be unrollable and windable, comprising a laminated sheet and a shaft member, wherein the laminated sheet is wound around the shaft member,
wherein the laminated sheet comprising:
a substrate layer; and
an outer layer,
wherein the laminated sheet has a moisture permeability of 100 g/m²·day or more at a temperature of 40°C and a relative humidity of 90% and is transparent,
the substrate layer is formed of a thermoplastic polyurethane resin, and
the outer layer is formed of a resin different from the substrate layer and has a tensile modulus in a range of 0.2 GPa or more and 10 GPa or less,
wherein the moisture permeability is obtained in accordance with JIS Z0208:1976 and the tensile modulus is measured in accordance with JIS K7161:2014 under the conditions as described in the description.

2. The laminated sheet roll according to claim 1,
wherein the outer layer is arranged over an entire one surface of the substrate layer or over entire surfaces on both sides of the substrate layer.

3. The laminated sheet roll according to claim 1 or 2,
wherein a haze is 10% or less which is measured in accordance with JIS K7136:2000 as described in the description.

4. The laminated sheet roll according to any one of claims 1 to 3,
wherein a total light transmittance is 90% or more, and
a parallel light transmittance is 70% or more,
wherein the total light transmittance and the parallel light transmittance are measured in accordance with JIS K7361-1:1997 as described in the description.

5. The laminated sheet roll according to any one of claims 1 to 4,
wherein the tensile modulus is 0.1 GPa or more.

6. The laminated sheet roll according to any one of claims 1 to 5,
wherein a thickness is in a range of 80 µm or more and 300 µm or less.

7. The laminated sheet roll according to any one of claims 1 to 6,
wherein the substrate layer has a thickness in a range of 20 µm or more and 295 µm or less.

8. The laminated sheet roll according to any one of claims 1 to 7,
wherein the outer layer has a thickness in a range of 5 µm or more and 100 µm or less.

9. The laminated sheet roll according to any one of claims 1 to 8,
wherein the outer layer absorbs moisture.

10. The laminated sheet roll according to any one of claims 1 to 9,
wherein the outer layer has a contact angle of 50° or less, which is measured using a liquid droplet method at 15 seconds after pure water is added dropwise on a surface of the outer layer.

11. The laminated sheet roll according to any one of claims 1 to 10,
wherein the resin for forming the outer layer is cellulose acylate.

## Patentansprüche

1. Laminierte Blattrolle, die ein Auskleidungsschirm eines landwirtschaftlichen Gewächshauses ist und so konfiguriert ist, dass sie abrollbar und aufrollbar ist, umfassend ein laminiertes Blatt und ein Schaftelement, wobei das laminierte Blatt um das Schaftelement gewickelt ist,
wobei das laminierte Blatt umfasst:
eine Substratschicht; und
eine Außenschicht,
wobei das laminierte Blatt eine Feuchtigkeitspermeabilität von 100 g/m²·Tag oder mehr bei einer Temperatur von 40 °C und einer relativen Luftfeuchtigkeit von 90 % aufweist und transparent ist,
die Substratschicht aus einem thermoplastischen Polyurethanharz gebildet ist, und
die Außenschicht aus einem Harz, das sich von der Substratschicht unterscheidet, gebildet ist und einen Zugmodul in einem Bereich von 0,2 GPa oder mehr und 10 GPa oder weniger aufweist,
wobei die Feuchtigkeitspermeabilität in Übereinstimmung mit JIS Z0208:1976 erhalten wird und der Zugmodul in Übereinstimmung mit JIS K7161:2014 unter den Bedingungen, wie in der Beschreibung beschrieben, gemessen wird.

2. Laminierte Blattrolle nach Anspruch 1,
wobei die Außenschicht über eine gesamte Oberfläche der Substratschicht oder über gesamte Oberflächen auf beiden Seiten der Substratschicht angeordnet ist.

3. Laminierte Blattrolle nach Anspruch 1 oder 2,
wobei ein Trübungswert 10 % oder weniger beträgt, der wie in der Beschreibung beschrieben in Übereinstimmung mit JIS K7136:2000 gemessen wird.

4. Laminierte Blattrolle nach einem der Ansprüche 1 bis 3,
wobei eine Gesamtlichtdurchlässigkeit 90 % oder mehr beträgt, und
eine parallele Lichtdurchlässigkeit 70 % oder mehr beträgt,
wobei die Gesamtlichtdurchlässigkeit und die Parallellichtdurchlässigkeit wie in der Beschreibung beschrieben in Übereinstimmung mit JIS K7361-1:1997 gemessen werden.

5. Laminierte Blattrolle nach einem der Ansprüche 1 bis 4,
wobei der Zugmodul 0,1 GPa oder mehr beträgt.

6. Laminierte Blattrolle nach einem der Ansprüche 1 bis 5,
wobei eine Dicke in einem Bereich von 80 µm oder mehr und 300 µm oder weniger liegt.

7. Laminierte Blattrolle nach einem der Ansprüche 1 bis 6,
wobei die Substratschicht eine Dicke in einem Bereich von 20 µm oder mehr und 295 µm oder weniger aufweist.

8. Laminierte Blattrolle nach einem der Ansprüche 1 bis 7,
wobei die Außenschicht eine Dicke in einem Bereich von 5 µm oder mehr und 100 µm oder weniger aufweist.

9. Laminierte Blattrolle nach einem der Ansprüche 1 bis 8,
wobei die Außenschicht Feuchtigkeit absorbiert.

10. Laminierte Blattrolle nach einem der Ansprüche 1 bis 9,
wobei die Außenschicht einen Kontaktwinkel von 50° oder weniger aufweist, der unter Verwendung eines Flüssigkeitströpfchen-Verfahrens 15 Sekunden nach dem tropfenweisen Zugeben von reinem Wasser auf eine Oberfläche der Außenschicht gemessen wird.

11. Laminierte Blattrolle nach einem der Ansprüche 1 bis 10,
wobei das Harz zum Bilden der Außenschicht Celluloseacylat ist.

## Revendications

1. Rouleau de feuille stratifiée qui est une toile de revêtement d'une serre agricole et est configuré pour être enroulable et déroulable, comprenant une feuille stratifiée et un élément d'arbre, dans lequel la feuille stratifiée est enroulée autour de l'élément d'arbre,
dans lequel la feuille stratifiée comprend :
une couche de substrat ; et
une couche extérieure,
dans lequel la feuille stratifiée présente une perméabilité à l'humidité de 100 g/m²·jour ou plus à une température de 40 °C et une humidité relative de 90 % et est transparente,
la couche de substrat est formée d'une résine de polyuréthane thermoplastique, et
la couche extérieure est formée d'une résine différente de celle de la couche de substrat et présente un module de traction dans une plage de 0,2 GPa ou plus et 10 GPa ou moins,
dans lequel la perméabilité à l'humidité est obtenue conformément à la norme JIS Z0208:1976 et le module de traction est mesuré conformément à la norme JIS K7161:2014 dans les conditions décrites dans la description.

2. Rouleau de feuille stratifiée selon la revendication 1,
dans lequel la couche extérieure est disposée sur l'intégralité d'une surface de la couche de substrat ou sur l'intégralité des surfaces des deux côtés de la couche de substrat.

3. Rouleau de feuille stratifiée selon la revendication 1 ou la revendication 2,
dans lequel un voile est de 10 % ou moins, mesuré conformément à la norme JIS K7136:2000 telle que décrite dans la description.

4. Rouleau de feuille stratifiée selon l'une quelconque des revendications 1 à 3,
dans lequel une transmittance lumineuse totale est de 90 % ou plus, et
une transmittance lumineuse parallèle est de 70 % ou plus,
dans lequel la transmittance lumineuse totale et la transmittance lumineuse parallèle sont mesurées conformément à la norme JIS K7361-1:1997 telle que décrite dans la description.

5. Rouleau de feuille stratifiée selon l'une quelconque des revendications 1 à 4,
dans lequel le module de traction est de 0,1 GPa ou plus.

6. Rouleau de feuille stratifiée selon l'une quelconque des revendications 1 à 5,
dans lequel une épaisseur est dans une plage de 80 µm ou plus et 300 µm ou moins.

7. Rouleau de feuille stratifiée selon l'une quelconque des revendications 1 à 6, dans lequel la couche de substrat présente une épaisseur dans une plage de 20 µm ou plus et 295 µm ou moins.

8. Rouleau de feuille stratifiée selon l'une quelconque des revendications 1 à 7, dans lequel la couche extérieure présente une épaisseur dans une plage de 5 µm ou plus et 100 µm ou moins.

9. Rouleau de feuille stratifiée selon l'une quelconque des revendications 1 à 8, dans lequel la couche extérieure absorbe l'humidité.

10. Rouleau de feuille stratifiée selon l'une quelconque des revendications 1 à 9, dans lequel la couche extérieure présente un angle de contact de 50° ou moins, mesuré par une méthode de la goutte sessile à 15 secondes après le dépôt goutte à goutte d'eau pure sur une surface de la couche extérieure.

11. Rouleau de feuille stratifiée selon l'une quelconque des revendications 1 à 10, dans lequel la résine pour former la couche extérieure est un acylate de cellulose.
